# EUROPEAN PATENT SPECIFICATION

(11) **EP 2 006 162 B1**
(45) Date of publication and mention of the grant of the patent: **26.01.2011**
(21) Application number: 08009720.7
(22) Date of filing: 28.05.2008
(51) Int. Cl.: B60R 19/48

(54) **Vehicle blind spot radar sensor mount**
Radarsensormontage für den toten Winkel von Fahrzeugen
Montage d'un radar capteur d'angle mort de véhicule

(30) Priority: 21.06.2007 US 766142
(43) Date of publication of application: 24.12.2008
(73) Proprietor: Chrysler Group LLC, Auburn Hills, MI 48326-2766 (US)
(72) Inventor: Buckley, Stephen J., Novi, MI 48374 (US); Ford, Steve L., Grand Blanc, MI 48439 (US)
(74) Representative: Ebner von Eschenbach, Jennifer

(56) References cited:
- DE-A1- 19 626 291
- DE-A1- 19 819 698
- JP-A- 10 044 891
- JP-A- 59 039 193
- JP-A- 2000 085 497
- JP-A- 2006 199 145
- US-A1- 2006 021 440

## Description

The present invention relates to a dual purpose bracket for mounting a radar sensor and a body panel fascia.

Modern vehicles are commonly being equipped with radar systems such that while an equipped vehicle is traveling along a road detection of surrounding vehicles is possible, particularly vehicles in a blind spot of a driver. Such vehicle detection may assist a driver of the radar-equipped vehicle with a lane change, for example. A radar sensor, as part of the radar system, may be mounted within a dedicated metal bracket under cover of a vehicle body panel. Additionally, vehicle body panels, also known as fascia, may be attached to an underlying vehicle structure using dedicated brackets specifically intended for such a mounting purpose. With single purpose or dedicated brackets, manufacturing costs, vehicle assembly costs, and the weight associated with such brackets contributes to excess manufacturing costs and vehicle weight.

Document JP-A-2006-199145 discloses a structure for retaining a sensor on a body fascia panel of a vehicle by means of a single bracket integrally molded with and extending from the body fascia panel of the vehicle, the bracket including a sensor support that extends directly from the fascia panel.

What is needed then is a device that does not suffer from the above disadvantages. This in turn will result in a device that permits multiple components, such as a radar sensor and a body fascia panel, to be conveniently mounted on a vehicle using a single bracket.

A structure for retaining a sensor, such as a radar sensor, and a body fascia panel may include a bracket or framework that defines a receptacle or pocket to retain and secure the sensor. The structure to retain the sensor may be part of the body fascia panel, such as a molded portion of the body fascia panel, and additionally employ a fastener retaining portion, such as a circular fastener retaining portion for a screw or bolt. Such screw or bolt may further secure the sensor bracket and body fascia panel to the vehicle and create a robust mount. To protect the sensor from the elements, whether they be water, mud, dust or general road grime, the sensor is surrounded by a seal or sealant.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Figure 1 is a rear perspective view of a vehicle depicting the location of a radar sensor in accordance with the present invention;
Figure 2 is a side view of a right rear side of a vehicle depicting the location of a radar sensor in accordance with the present invention;
Figure 3 is a top view of an effective range of a radar sensor;
Figure 4 is a top view depicting a general location of a radar sensor in accordance with the present invention;
Figure 5 is an enlarged top view depicting a radar sensor in accordance with the present invention;
Figure 6 is a rear view depicting a general location of a radar sensor in accordance with the present invention;
Figure 7 is an enlarged rear view depicting a radar sensor in accordance with the present invention;
Figure 8 is a top view of a radar sensor depicting a zone within which object detection is possible;
Figure 9 is a rear view of a radar sensor depicting a zone within which object detection is possible;
Figure 10 is a left side view of a rear of a vehicle depicting a radar sensor bracket within which a radar sensor mounts;
Figure 11 is an enlarged view of a radar sensor bracket in accordance with the teachings of the present invention;
Figure 12 is a perspective view of a fascia including a bracket that secures a radar sensor; and
Figure 13 is a perspective view of a fascia including a bracket that secures a radar sensor, and a surrounding sealant.

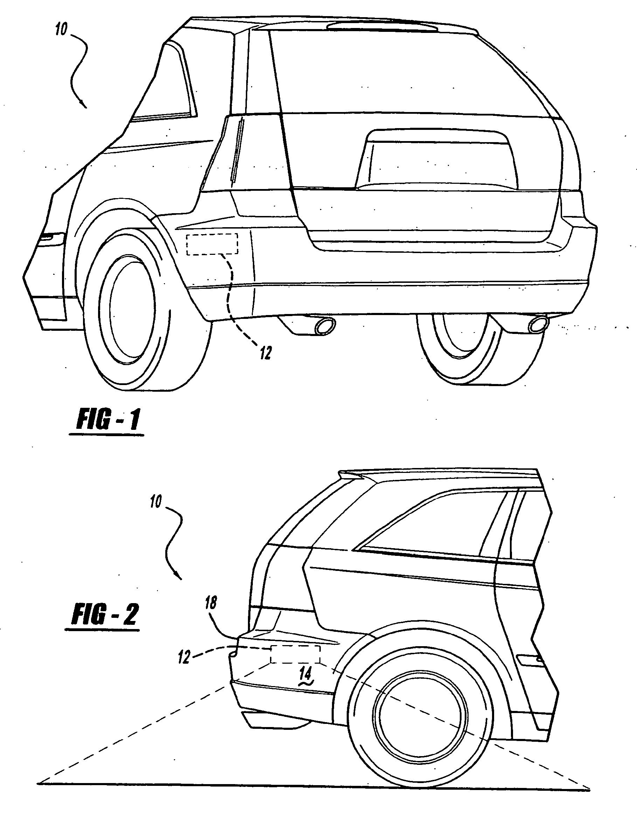

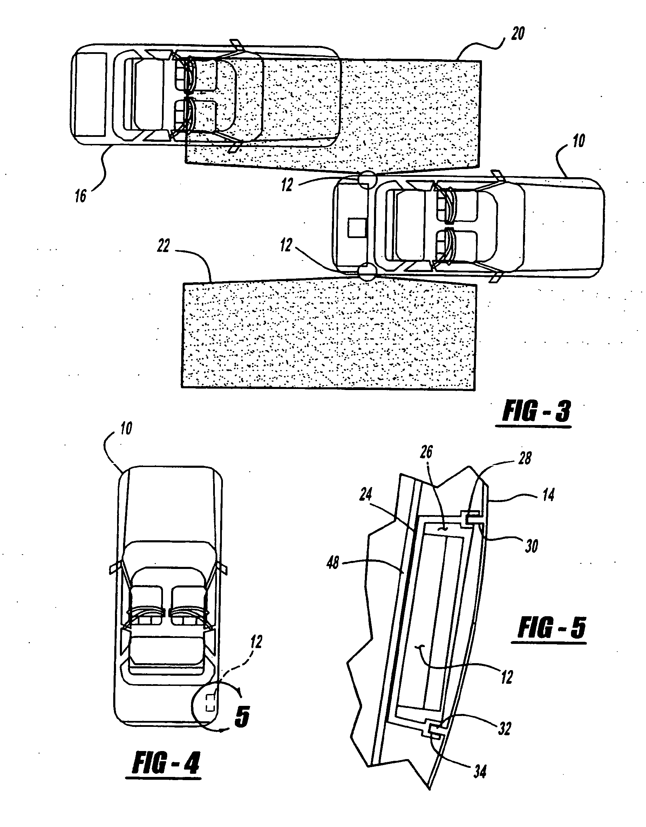

The following description of the preferred embodiments is merely exemplary in nature and is in no way intended to limit the invention, its application, or uses. Turning now to Figure 1, a vehicle 10, such as an automobile, may employ a sensor 12, such as a radar sensor, to detect objects, such as other vehicles, in the area proximate a left side and a left rear side of the vehicle 10. Figure 2 depicts a location of a sensor 12 on the vehicle 10 such that objects, such as other vehicles, may be detected on a right side and a right rear side of the vehicle 10. Continuing with Figure 2, in one example, the sensor 12 is depicted in a lower area of the vehicle 10 behind a body fascia panel 14, such as the rear bumper body fascia panel 14. With the sensor 12 positioned or mounted in such a location on the vehicle 10, proper sensing of surrounding objects, such as an adjacent vehicle(s), may be performed, as depicted in Figure 3.

Turning to Figure 3, a vehicle 10 is depicted with multiple radar sensors, such as radar sensors 12, installed on each side of the vehicle 10 as initially depicted in Figures 1 and 2. Figure 3 further depicts a different vehicle 16 next to and slightly behind the sensor-equipped vehicle 10. Because the sensing vehicle 10 is equipped with at least one of the sensors 12, the driver of the vehicle 10 may be alerted to the other vehicle 16, which is within a close proximity to the vehicle 10 and potentially in a blind spot of the driver of the vehicle 10. To detect the vehicle 16, the sensor 12 of the vehicle 10 transmits, as an example, a radar signal. As depicted and described, radar sensors exhibit an advantage that they can be integrated behind a vehicle bumper 18 and thus remain unseen to an observer standing beside the rear bumper 18, which contributes to the design aesthetics of the vehicle 10. In contrast to the limited range of infrared technology, whose sensors may be seen resident in a vehicle bumper from the exterior of the bumper, radar sensors 12 have a range of between a few centimeters and up to 30 meters, in one example of an automotive application. Another advantage is that radar sensors are not affected by the influences of weather, unlike infrared systems. Finally, the high accuracy and resolution of radar sensors allow them to be used in applications related to safety.

Continuing with Figure 3, detection areas 20, 22 are depicted as representative areas within which a sensor 12 may be effective at detecting a vehicle 16, which may be approaching the vehicle 10. By detecting the vehicle 16 approaching the vehicle 10 as both are moving in the same direction along a road, the driver of the vehicle 10 will not be burdened with turning his or her head in an attempt to visually check an area that may be known as a "blind spot" to a driver of a vehicle 10. In a multiple lane situation, such as a three lane or greater road, if the vehicle 10 is traveling along an interior lane, vehicles approaching on either side of the vehicle 10 may be simultaneously detected.

Turning now to Figures 4-7, initial details of the invention will be presented. Figure 4 depicts the general location of the sensor 12 in vehicle 10 from a macro perspective while Figure 5 depicts an enlarged top view of the sensor 12 in a mounted position. Continuing with Figure 5, depicted is a sensor 12 that is retained within a bracket 24 that may mount to the vehicle underbody 48, and more specifically, the bracket 24 may be a framework or solid structure that is configured to define a pocket 26 within which the sensor 12 may reside. The bracket 24 may be elongated, meaning the bracket may have one dimension, such as a length, that is longer than the other two, such as the thickness and width. There are a variety of ways in which the sensor 12 may fit into the bracket 24. The sensor 12 may drop in from the top of the bracket 24 or either end of the bracket 24, that is, in the for-aft direction of the vehicle. Continuing, the bracket 24, framework, or solid structure may further define a slot or groove 28, within which a projection 30 of the body fascia panel 14 may fit into to securely hold the body fascia panel 14. The slot or groove 28 may be along the length of the bracket 24, as opposed to the width or height.

The body fascia panel 14, also known simply as fascia 14, may be a molded plastic or fiberglass and have at least projection 30 molded directly into a rear side of the fascia 14. Alternatively, the projection 30 may be a separate piece and be joined to the fascia 14 by an adhesive, a heating and joining process or a fastener that passes through or into the fascia 14. For instance, a fastener may pass from the exterior of the fascia 14, and into the projection 30 to secure the projection to the fascia 14. Or the projection 30 may be secured to the fascia with a fastener that passes from the inside of the fascia, first through the projection 30 and then into the fascia 14. Regardless of how the projection is situated on the fascia 14, the projection 30 may then be successfully pressed into the slot 28 to secure the fascia 14 to the bracket 24. As depicted in Figure 5, there may be a single projection 30 that presses into slot 28, or a second projection 32 that presses into another slot 34. As depicted in Figure 5, the slot 28 may be viewed as the front slot, while the slot 34 may be viewed as the rear slot, keeping with the for-aft orientation of the vehicle 10.

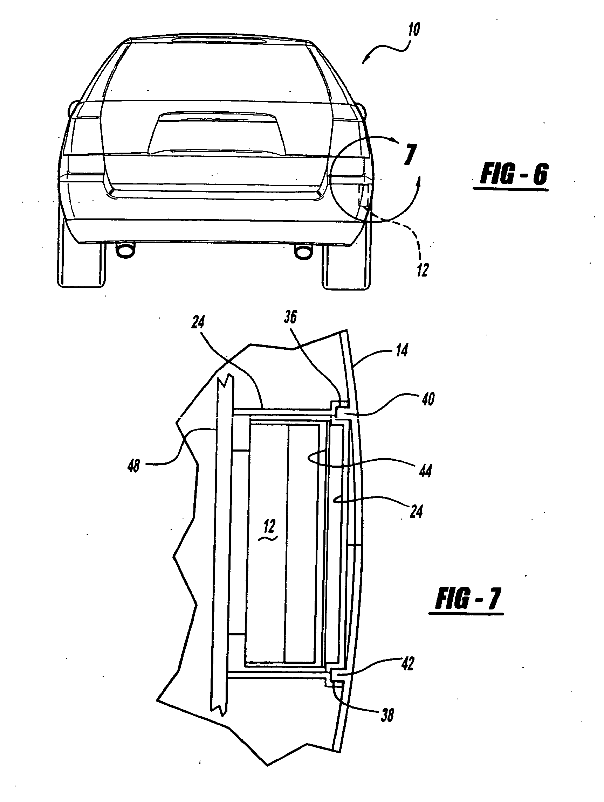

Turning now to Figures 6 and 7, a similar arrangement as in Figures 4 and 5 will be presented. Figure 6 depicts a vehicle 10 in which the sensor 12, which may be the same sensor as depicted in Figures 4 and 5, is situated behind the bumper fascia 14. Because Figure 7 is a view from the rear, the bracket 24 defines a top slot 36 and a bottom slot 38, using the ground on which the vehicle is resting as a reference. Similar to the structure described in Figure 5, the fascia panel 14 has a projection 40, considered a top projection 40 for ease of reference, which fits into a top slot 36, and a projection 42, considered a bottom projection 42 for ease of reference, that fits into a bottom slot 38. Similar to the prior-explained projections 30, 32, the projections 40, 42 may be integrally molded into the fascia 14, which may be a plastic or fiberglass material. Alternatively, the projections 40, 42 may be fastened to the fascia 14 using traditional fasteners, such as screws that originate from either the exterior or the interior of the fascia 14 and screw into both, the fascia 14 and either of the projections 40, 42. Finally, similarly to the sensor 12 of Figure 5, the sensor 12 may slide into the pocket 44 or receptacle 44 defined by the bracket 24 or framework 24. Alternatively, the bracket 24 may instead be replaced with a solid structure, such as plastic, and have a receptacle or pocket 44 molded directly into the solid structure. Similarly, the top slot 36 and bottom slot 38 may be molded directly into such a solid plastic structure. The bracket 24 of Figures 5 and 7 may mount to a vehicle underbody 48 with traditional fasteners such as screws or bolts. Additionally, if the bracket 24 is constructed as a frame-like structure, it may be made from a metal or a plastic.

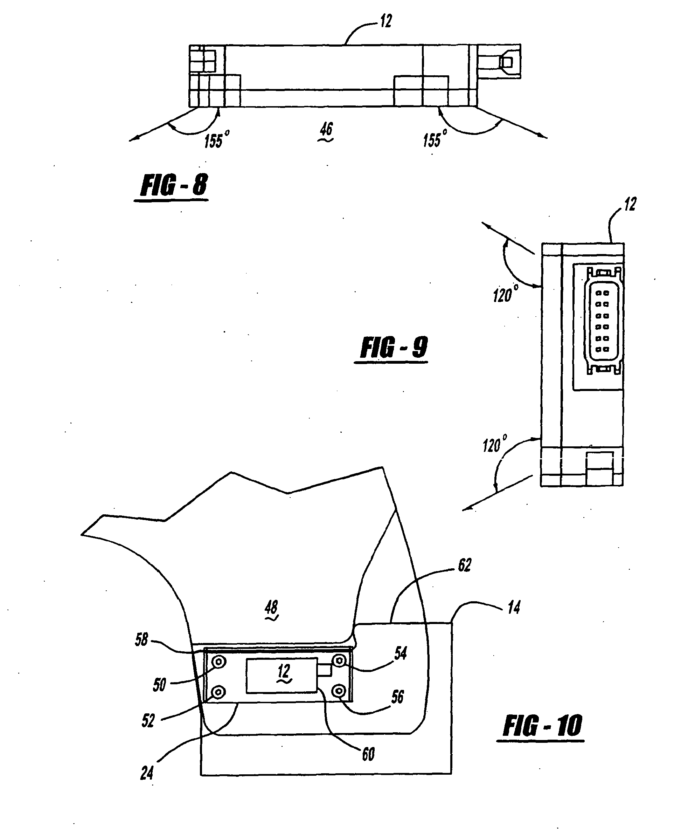

Figure 8 is a top view of a representative radar sensor 12 depicting an angular range of radar detection as viewed from above the sensor 12, while Figure 9 is a rear view of the representative radar sensor 12 depicting an angular range of radar detection if viewed from a front or rear of the sensor 12 or vehicle 10 within which the sensor is mounted. The radar sensor 12 depicted in Figures 8 and 9 is but one example of the angular range of a radar detector that may be used in the vehicle 10 to detect surrounding vehicle(s), as depicted in Figure 3. In other words, vehicles entering the blind spot area 46, which encompasses the radar detection area of the radar sensor 12, will be detected and alert the driver of an equipped vehicle to such detection.

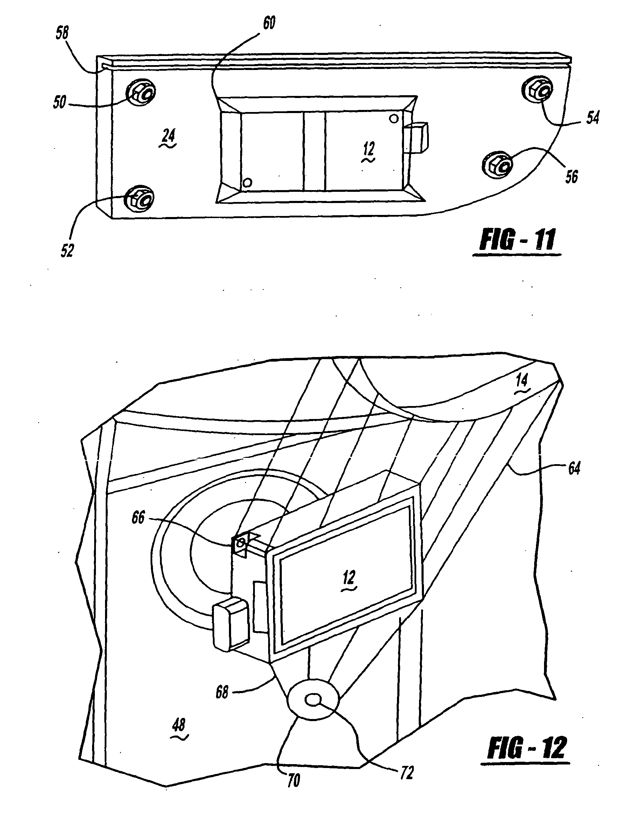

Turning now to Figures 10 and 11, the bracket 24 and its use in conjunction with the fascia 14 and sensor 12 will be further described. Figure 10 is a left side view of a rear of a vehicle. More specifically, the sensor 12 lies within a pocket or receptacle 60 formed as part of or within the frame-like or solid bracket 24. The pocket or receptacle 60 may be rectangular or approximately rectangular, such as with rounded interior corners. The manufacturing process used to make the bracket may dictate whether sharp interior corners or rounded interior corners, for example, are manufactured into the bracket 24. The bracket 24 may be secured to the vehicle or vehicle underbody 48 using fasteners 50, 52, 54, 56 while the fascia 14 fits into a slot 58 on the bracket 24, as described in conjunction with Figures 5 and 7. Figure 11 depicts an enlarged view of the bracket 24 that defines a pocket within which the sensor 12 resides. Near the top edge of the bracket 24, a slot 58 receives a projection or length of fascia edge 62 (Figure 10) to secure the fascia 14 to the bracket 24. Thus, the bracket 24 serves the dual purpose of retaining the sensor 12 and the fascia 14.

Turning now to Figure 12, the body fascia panel 14 can be seen located in front of the vehicle underbody 48, or in other words, the underbody 48 is behind the body fascia panel 14. More specifically, attached to as a separate piece, or molded directly into the body fascia panel 14 is an extension piece of material that functions as a sensor support 64 within which the sensor 12 resides. As depicted, the sensor support 64 may be a strand-like structure molded into the body fascia panel 14. Alternatively the sensor support 64 may be a solid structure, as opposed to the strand-like structure, which has a material and a weight-saving advantage associated with it. Regardless of whether the sensor support 64 is molded to have strands like a framework or is molded as a solid structure, the sensor support 64 defines a sensor pocket 66 within which the sensor 12 slides into and resides for subsequent use. In addition to the sensor support 64, a mounting support 68 lies on a side of the sensor 12 opposite to the sensor support 64. The mounting support 68 may have a fastener area 70 through a hole 72 of which a fastener may pass. The fastener area 70 may form a complete circle to prevent a fastener from losing its grip or fastening force. Alternatively, the fastener area 70 may be semi-circular to ease in connection of the sensor support 64 and mounting support 68 to the fastener.

Continuing with Figure 12, the mounting support 68 may be a structure formed of strands of material as in a framework, or a solid structure, the former having greater material and weight-saving advantages than the latter. Regardless of its geometric or structural form, the sensor pocket 66 is formed in part by the mounting support 68 and the sensor support 64. Stated another way, the sensor support 64 and the mounting support 68 bound the sensor pocket 66 and help to define the pocket 66. The embodiment of Figure 12 has the advantage of incorporating a radar sensor 12 into a molded pocket 66 of a structure. The structure takes the form of a sensor support 64 and a mounting support 68 that are designed to secure the sensor 12 but also is the body fascia panel 14. Thus, a single structure may serve multiple functions.

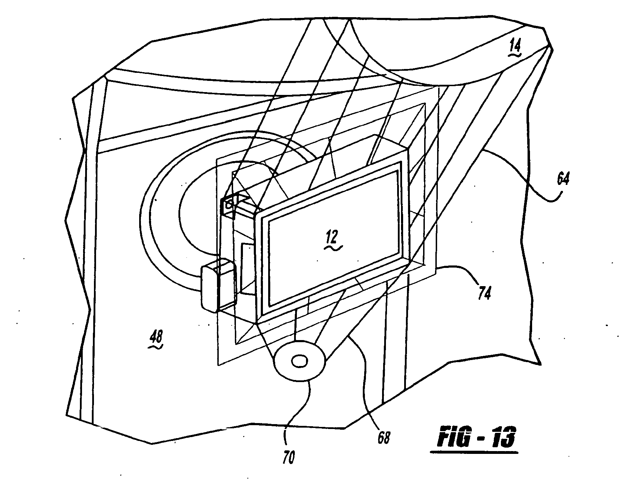

Figure 13 depicts the embodiment of Figure 12 with a seal or sealant 74 surrounding the sensor 12. The seal or sealant 74 may be a foam, rubber or plastic material that may be installed around the sensor 12 to seal the sensor 12 to the inside surface of the fascia and protect the sensor 12 from dust, dirt, water and debris that the sensor 12 may be subjected to in its potential installation locations, such as in a lower fascia panel location near a road surface.

There are multiple advantages of the present invention. First, the bracket 24 is capable of retaining a sensor 12 and a body fascia panel 14. In one embodiment, the bracket 24 may be manufactured from a metal, such as steel, aluminum or magnesium. Alternatively, the bracket 24 may be manufactured from a plastic to provide advantages related to weight, rust and corrosion, and manufacturing costs. With the embodiment depicted in Figures 5 and 7, the fascia panel 14 may be installed into the bracket 24 after the bracket 24 is fastened to a vehicle underbody structure 48. Figure 10 depicts such a fastening. Alternatively, the bracket 24 may be integrally molded to the fascia 14 as part of the fascia 14 such that no separate connection between the bracket 24 and the fascia 14 is necessary to hold the bracket 24 to the fascia 14. Such a scenario is depicted in Figures 12 and 13. Figure 12 depicts the advantage of having the sensor support 64 integrally molded into or as part of the fascia 14. The embodiment depicted in Figure 12 may be located in a lower location of the fascia behind a rear wheel of a vehicle, as depicted in Figures 1 and 2. An additional advantage is that parts that may have previously been separate, such as a radar sensor bracket and a fascia mounting bracket, may in part be eliminated. A dual use part, such as the single piece as best depicted in Figures 5, 7, and 10-13, eliminates multiple, separate parts. Another advantage is that by molding the radar sensor pocket 66 into the fascia sensor support 64 and fascia 14, as depicted in at least Figure 12, the sensor 12 may be properly aligned upon installation of the fascia 14 onto a vehicle 10. That is, proper sensor alignment is molded into the fascia 14 and sensor pocket 66, and thus, no subsequent, post-installation alignment is required. Finally, because all vehicles have body fascia panels, the present invention may be incorporated into nearly every vehicle in which radar sensors are required.

## Claims

1. A structure for retaining a sensor (12) and a body fascia panel (14) of a vehicle, comprising:
a single bracket (24) integrally molded with and extending from the body fascia panel (14) of the vehicle, the bracket (24) including a sensor support (64) that extends directly from the fascia panel and a mounting support (68) arranged for mounting to an underbody structure (48) of the vehicle different than the fascia panel (14), the sensors support (64) and mounting support (68) together defining an integrally formed pocket (66) for housing the sensor (12), the mounting support (68) of the bracket (24) securing the body fascia panel (14) to the underbody structure (48).

2. A structure according to claim 1, wherein the sensor support (64) and the mounting support (68) each include a plurality of strand-like members extending along a length of each support and being spaced apart from each other.

3. A structure according to claim 1 or claim 2, wherein the mounting support (68) comprises a fastener area (70).

4. A structure according to claim 2 and claim 3, wherein the strand-like members of the sensor support (64) extend from the fascia panel (14) to the sensor pocket, (66) and the strand like members of the mounting support (68) extend from the sensor pocket to the fastener area (70) positioned at an end of the mounting support (68) opposite the sensor pocket (66).

5. A structure according to claim 3 or 4, wherein the fastener area (70) is circular.

6. A structure according to anyone of the preceding claims, wherein the sensor (12) is surrounded by a sealant (74).

7. A structure according to any one of the preceding claims, wherein the sensor (12) is a radar sensor.

8. A structure according to any one of the preceding claims, wherein the pocket (66) is rectangular.

9. A structure according to any one of the preceding claims, wherein the mounting support (68) is disposed on an opposite side of the sensor pocket (66) as the sensor support (64).

## Patentansprüche

1. Struktur zum Halten eines Sensors (12) und einer Karosserieverkleidungsplatte (14) eines Fahrzeugs, wobei die Struktur folgendes umfasst:
einen einzelnen Träger (24), der integral mit der Karosserieverkleidungsplatte (14) des Fahrzeugs ausgebildet ist und sich von dieser erstreckt, wobei der Träger (24) einen Sensorträger (64) aufweist, der sich direkt von der Verkleidungsplatte erstreckt, und einem Befestigungsträger (68), der zur Befestigung an einer Unterbodenstruktur (48) des Fahrzeugs angeordnet ist, die sich von der Verkleidungsplatte (14) unterscheidet, wobei der Sensorträger (64) und der Befestigungsträger (68) gemeinsam eine integral ausgebildete Tasche (66) zur Unterbringung des Sensors (12) definieren, wobei der Befestigungsträger (68) des Trägers (24) die Karosserieverkleidungsplatte (14) an der Unterbodenstruktur (48) sichert.

2. Struktur nach Anspruch 1, wobei der Sensorträger (64) und der Befestigungsträger (68) eine Mehrzahl strangartiger Elemente aufweisen, die sich entlang einer Länge jedes Trägers erstrecken und räumlich getrennt voneinander angeordnet sind.

3. Struktur nach Anspruch 1 oder Anspruch 2, wobei der Befestigungsträger (68) eine Befestigungsfläche (70) aufweist.

4. Struktur nach Anspruch 2 oder Anspruch 3, wobei sich die strangartigen Elemente des Sensorträgers (64) von der Verkleidungsplatte (14) zu der Sensortasche (66) erstrecken, und wobei sich die strangartigen Elemente des Befestigungsträgers (68) von der Sensortasche (66) zu der Befestigungsfläche (70) erstrecken, die an einem Ende des Befestigungsträgers (68) entgegengesetzt zu der Sensortasche (66) angeordnet ist.

5. Struktur nach Anspruch 3 oder 4, wobei die Befestigungsfläche (70) kreisförmig ist.

6. Struktur nach einem der vorstehenden Ansprüche, wobei der Sensor (12) von einem Dichtungsmittel (74) umgeben ist.

7. Struktur nach einem der vorstehenden Ansprüche, wobei es sich bei dem Sensor (12) um einen Radarsensor handelt.

8. Struktur nach einem der vorstehenden Ansprüche, wobei die Tasche (66) rechteckig ist.

9. Struktur nach einem der vorstehenden Ansprüche, wobei der Befestigungsträger (68) auf einer gegenüberliegenden Seite der Sensortasche zu dem Sensorträger (64) angeordnet ist.

## Revendications

1. Structure pour retenir un capteur (12) et un panneau de carénage de carrosserie (14) d'un véhicule, comprenant :
un support unique (24) intégralement moulé avec et s'étendant depuis le panneau de carénage de carrosserie (14) du véhicule, le support (24) comprenant un support de capteur (64) qui s'étend directement depuis le panneau de carénage et un support de montage (68) agencé pour se monter sur une structure de bas de caisse (48) du véhicule différente du panneau de carénage (14), le support de capteur (64) et le support de montage (68) définissant ensemble une poche formée intégralement (66) pour accueillir le capteur (12), le support de montage (68) du support (24) fixant le panneau de carénage de carrosserie (14) à la structure de bas de caisse (48).

2. Structure selon la revendication 1, dans laquelle le support de capteur (64) et le support de montage (68) comprennent chacun une pluralité d'éléments semblables à des cordes s'étendant sur une longueur de chaque support et étant espacés les uns des autres.

3. Structure selon la revendication 1 ou 2, dans laquelle le support de montage (68) comprend une zone de fixation (70).

4. Structure selon les revendications 2 et 3, dans laquelle les éléments semblables à des cordes du support de capteur (64) s'étendent depuis le panneau de carénage (14) vers la poche de capteur (66), et les éléments semblables à des cordes du support de montage (68) s'étendent de la poche de capteur (66) vers la zone de fixation (70) positionnée à une extrémité du support de montage (68) opposée à la poche de capteur (66).

5. Structure selon la revendication 3 ou 4, dans laquelle la zone de fixation (70) est circulaire.

6. Structure selon l'une quelconque des revendications précédentes, dans laquelle le capteur (12) est entouré d'un produit d'étanchéité (74).

7. Structure selon l'une quelconque des revendications précédentes, dans laquelle le capteur (12) est un capteur de radar.

8. Structure selon l'une quelconque des revendications précédentes, dans laquelle la poche (66) est rectangulaire.

9. Structure selon l'une quelconque des revendications précédentes, dans laquelle le support de montage (68) est disposé sur un côté opposé de la poche de capteur (66) comme le support de capteur (64).
